# EUROPEAN PATENT APPLICATION

(11) **EP 1 569 406 A1**
(43) Date of publication of application: **31.08.2005**
(21) Application number: 04004570.0
(22) Date of filing: 27.02.2004
(51) Int. Cl.: H04L 29/06, H04M 7/00

(54) **A system and method to transmit stored audio data to a telephone**

(71) Applicant: Web.De AG, 76227 Karlsruhe (DE)
(72) Inventor: Cotte, Pierre-Alain, 76227 Karlsruhe (DE)
(74) Representative: DTS München

(57) **Abstract**

A communications system comprising a web server (4), a client computer (1), a data network (3) and a telephone network (6) comprising first telephone equipment (5a) a switching centre (7) and at least one second telephone equipment (5b), said client computer (1) and first telephone equipment (5a) forming a user unit (10) assigned to a first user, said client computer (1) being able to communicate with said web server (4) in order to graphically display web pages delivered by the web server (4), said web server (4) being connected with said switching centre (7),gives easier and more convenient access to stored audio data during the telephone call in that said communications system further comprises means to transmit stored audio data to said at least one second telephone equipment (5b).

## Description

### Field of the invention

The current invention relates to a communications system comprising a web server, a client computer, a data network and a telephone network comprising first telephone equipment, a switching centre and at least one second telephone equipment, said client computer and first telephone equipment forming a user unit assigned to a first user, said client computer being able to communicate with said web server in order to graphically display web pages delivered by the web server, said web server being connected with said switching centre and a method to transmit stored audio data to a telephone.

### Background of the invention

The Internet is an established medium for distributing information to a large number of people. One way the Internet is used is the so-called World Wide Web (www) using a standard protocol such as http to interchange information between clients and hosts. To achieve this host computers usually run so called servers, for www a so-called web server. The web server is able to retrieve information from further servers, for example from database servers. For interaction with a database server or other servers, web servers usually have gateways like Common Gateway Interface (CGI), PHP or the like.

Once a client sends a request via http-protocol to the server application, the request is fulfilled by the web server application by sending back http-data, which is processed and displayed by the client computer. Commonly, the web server retrieves secondary data sources like data base servers on the fly, that means that the client computer is not able to recognize and is not notified of the fact that secondary data sources are used. Additionally, the web server locally can cache often-retrieved data.

Recently, web applications were combined with the telephone services. A server-side web application is used to control services of a telephone system. The telephone system can be any kind of analogue or digital telephone service, especially Public Switched Telephone Networks (PSTN) like Integrated Services Digital Networks (ISDN) or packet switching telephone networks integrated in ATM networks and the like. It is also possible to integrate an analogue or digital standalone telephone network often referred as Plain Old Telephone System (POTS). Furthermore, cellular mobile telephone networks like GSM or UMTS networks may be used as telephone services.

For example EP 1359702 (filed by the applicant) discloses a communications environment combining a multitude of communication services, especially web services and telephone services, where every user is offered a personalized web page.

WO03/094432 (also filed by the applicant) discloses a telecommunications website, where telephone connections between two or more telephones are established under control of a website.

In common telephone systems, if the user wants to transmit stored audio data to another calling party he has to play the stored audio data with some means like a CD-player, and audio tape-player or other like and transmit it for example via the microphone of the telephone. This is very inconvenient and the user has to make use of additional equipment like that CD-player.

### Objects of the invention

It is therefore an object of the present invention to provide a system and a method that gives easier and more convenient access to stored audio data during the telephone call.

### Summary of the invention

The aforesaid object is achieved by a communications system comprising a web server, a client computer, a data network and a telephone network comprising first telephone equipment, a switching centre and at least one second telephone equipment, said client computer and first telephone equipment forming a user unit assigned to a first user, said client computer being able to communicate with said web server in order to graphically display web pages delivered by the web server, said web server being connected with said switching centre, characterized in that said communications system further comprises means to transmit stored audio data to said at least one second telephone equipment.

In the context of the present invention, client computer means a so-called personal computer, a terminal of a larger computer system, a laptop or the like. A web server is usually run by a central computer host as a software application that provides web pages for client computers that are connected to the hosts by said data network. Data provided by the web server is displayed graphically by the client computer as a web page. Said data network is usually referred to as Internet, Wide Area Network, and Metropolitan Network etc. In the context of the present invention, every other kind of information technology using electronic equipment as data network is included. Telephone equipment can be a telephone apparatus or terminal using a public switched network, a kind of packet switched network, often referred to as Internet Telephony (so-called Voice over IP), or any kind of GSM or UMTS telephone. Thus telephone equipment might be a single standalone apparatus for use without connection to the client computer, or can be a software service or hardware integrated as telephone equipment in said client computer. The client computer and the telephone equipment form said user unit. Therefore, nevertheless whether those systems are integrated parts or single units, telephone equipment and client computer are located close to each other, so that a user can use them simultaneously. In the context of the present invention the term first user denominates a user operating said user unit. The telephone network comprising beside the first telephone equipment at least a second telephone equipment implies that the telephone network might comprise a large amount of telephones.

Said means to transmit stored audio data is hardware or software integrated in the communication system. The means to transmit stored audio data especially comprises a file system, a database, a file server or a data base server or the like to store files containing audio data. The files can have different file formats for example CD-Rom audio format, MP3 files or other digital audio data file formats. The means to transmit stored audio data further comprise software or hardware to transmit said data files to the Telephone. Data can be transmitted to first and second telephone equipment simultaneously or for example only to second telephone equipment. To achieve this, a software service changes the stored data into analogue or digital data suitable for transmitting over the used telephone network is included.

The service can be implemented for example as a software program in conjunction with the web server, a single dedicated server for changing the data format and delivering said digital audio data directly or via said switching centre to one or both of the telephones. The service for storing aid audio data files and the service for delivering said audio data files are preferably controlled by means of said web server. During the telephone call using said first telephone equipment and said second telephone equipment, the first user controlling the first user unit can play additional audio data sources using control elements of the website (telecommunications website) for choosing and delivering audio data to the second telephone equipment. Thus the first user being the calling party can control on his telecommunications website the audio output at the remote telephones of the called parties. As a called party the first user can control on his telecommunications website the audio output at the remote telephone of the calling party.

In a preferred embodiment said means to transmit stored audio data comprises a file server implemented as database or as directory on one or more hard disks. Thus the word file server comprises every kind of means to store data files.

In a further preferred embodiment said means to transmit stored audio data comprises means to select audio files. By said means a user can retrieve and select audio data files. The means to select audio files is e.g. a frame or part of a frame of a web page, a popup window or part of a popup window that depicts the tree structure and included files of a file directory and so on.

In a further preferred embodiment said means to transmit stored audio data comprises means to manipulate sound characteristics of said audio data. The sound characteristics are e.g. volume, adjustable bass and treble filters, an equalizer to control a multitude of band pass filters and so on.

In a further preferred embodiment said means to select audio files and/or said means to manipulate sound characteristics is incorporated in a web page, in particular in a web page of a telecommunications website.

Preferably, said means to select audio files and/or said means to manipulate sound characteristics of said audio data comprises graphical elements like buttons, sliders, rotary knobs and so on.

In a further preferred embodiment said means to select audio files and/or said means to manipulate sound characteristics of said audio data comprise means to select and/or manipulate two or more sound data files simultaneously. Thus the first user is able to mix two or more audio sources and play them simultaneously.

In a further preferred embodiment said telephone network allows a connection between al least three telephones and that said means to transmit stored audio data is able to transmit stored audio data to all connected telephones. Calls between three and more calling parties are usually referred to as conference call, the first user can play the digital audio file to all participating parties of the conference call.

The aforesaid object of the invention is also achieved by a method to transmit stored audio data to a telephone by using a communications system according to the present invention.

### Brief description of the drawings

- Fig. 1: is a sketch showing the principal architecture of a communications system according to the present invention;
- Fig. 2: a web page of a telecommunications website;
- Fig. 3: a magnified part of the web page according to fig. 2.

### Detailed Description of the Invention

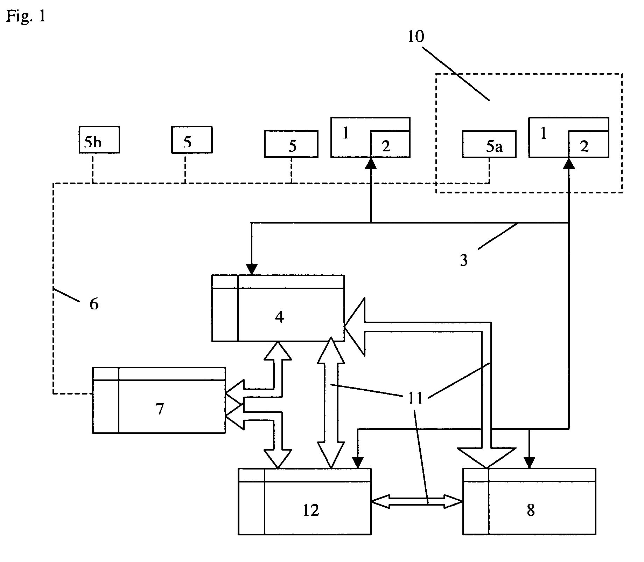

Fig. 1 depicts a sketch showing the principal architecture of the communications system according to the present invention. The communications system comprises at least one and preferably a plurality of client computers 1 that are connected with a web server 4 by the communications network 3. Commonly, the network 3 connects a multitude of client computers 1 with a multitude of web servers 4. Fig. 1 shows three client computers 1 connected with one web server 4 as a simple example to reduce the complexity of the following description. For the understanding of the described embodiment of the present invention regarding one client computer 1 connected via data network 3 with one web server 4 is sufficient. Thus, the following description is limited on the description of these elements. Client computer 1 can be any kind of computer system; usually the client computer 1 is a personal computer, a laptop, a computer terminal or the like. The client computer 1 runs at least a web browser 2 as software or hardware application. The web browser 2 sends so called requests via network 3 to the web server 4. The web server 4 sends data according to the request via network 3 back to the client computer 1. The data is then processed by the client computer 1 and graphically displayed as a web page by the web browser 2. Usually, request of data by client computer 1 as well as delivery of data by web server 4 is performed with hypertext transport protocol (http).

The web page displayed by web browser 2 might include active elements, for example buttons, sliders, list boxes or option fields for the purpose of interaction between web browser 2 and web server 4. By using an active element, for example by clicking on it or by choosing an item with the computer mouse, the user can send data to the web server that is further processed by the web server. By using said active element is further possible to run a local application on the client computer or to run applications on the server computer for example by a common gateway interface or by scripting languages like JAVA or the like. With help of said elements for example a data base query might be conducted with help of the web server 4. The results of the data base query is then delivered by web server 4 and displayed by the browser of the client computer 1 as a web page.

Web server 4 offers a diversity of services for a client computer 1 or said web browser 2, respectively. Services are for example e-mail, chat, data base front ends of a great variety of information systems or so called unified messaging systems and so on.

The communications system according to fig. 1 further comprises a telephone network 6. The telephone network 6 with a switching centre 7 connects telephones 5. The telephones 5 might be analogue or digital telephones of a public switched telephone network, where the telephones 5 are connected with cables or the like to telephone network 6. Telephones 5 might also be mobile phones of a cellular telephone network like GSM or UMTS. Telephone network 6 as well as switching centre 7 allows establishing telephone connections between two or more telephones 5. Alternatively, a telephone 5 can be part of a so-called Internet Telephone System. The system uses the Internet to transmit voice data via data packets (voice over IP). Then the client computer 1 is equipped with a microphone and a loudspeaker, e.g. a headset, to convert analogue voice signals in digital data and vice versa.

The switching centre 7 is connected with web server 4 so both servers can exchange data. By said connection, telephone services can be controlled by a user using web server 4. For example, the user can establish a telephone connection between telephone 5 associated with the user by entering or choosing a telephone number in a web page and then for example clicking on a button "call". The telephone number and the request for establishing a telephone connection is sent from web server 4 to switching centre 7, then switching centre 7 establishes the desired connection. Telephone 5a is assigned to client computer 1, so both together form a user unit 10. In the context of this application the term user unit does not necessarily mean, that telephone 5a and client computer 1 are an integrated device, but both are located near to each other. This means, that a user using client computer 1 is able to use telephone 5a simultaneously. Telephone 5a and client computer 1 might be located for example on the same desk in an office, at home or public available for example in a hotel lobby, in an airport and so on.

A user, here referred to as first user in order to distinguish from other users, is assigned a personal web page. By the personal web page the user can -among other services- control telephone 5a assigned to client computer 1 as a user unit 10. Consequently the telephone assigned to first user and being member of user unit 10 is here referred to as first telephone 5a. By using his personal web page, the first user can e.g. call another party, pick-up the phone, initiate conference calls with two or more parties and so on. All commonly known telephone features are performed under control of the first user's personal web page. In Fig. 1, the other calling party's telephone is referred to as second telephone equipment 5b. The first user utilizes the first telephone equipment 5a during a telephone call with another party using second telephone equipment 5b.

The personal web page is available for the user regardless of the end user unit he is using currently for interaction with the communications environment. The user can define more than one user unit suitable for interaction with the communications environment. For example, a client-computer located in the office of the user together with a telephone located in this office form a first user unit, a client computer located at home together with a home phone form a second user unit, a client computer in the lobby of a hotel together with a GSM phone might form a third user unit and so on. The user simply defines the currently used user unit (e.g. unit 10 as shown in Fig.1) by choosing the telephone number of the telephone equipment assigned to this user unit. If the user for example uses the client computer and the telephone located in his office, he will choose the telephone number of the office's telephone e.g. in a list box of his personal web page and therewith define the first user unit as the currently used one. So by choosing said telephone number the location of the unit is defined.

Web server 4 is further connected with a file server 8. The connection can be established by use of a data network 3 or by use of a dedicated connection in private network that is not public available. To reduce complexity of the sketches in Fig. 1, a dedicated connection 11 between file server 8 and web server 4 is shown. Instead of a dedicated file server 8 the file server can be integrated as software directly in web server 4.

The file server 8 stores audio data files for example in a file system on a hard disc, as data records in a database or any other kind of data storage means. Upon access by the web server 4, the file server 8 delivers audio data files to the telephone subsystem of the communications system. Then said data files are processed by an audio-data-converter 12. The data network 3 connects the audio-data-converter 12, file server 8 and web server 4. Alternatively, converter 12, file server 8, and web server 4 can be connected via dedicated network connections 11. Converter 12 is connected to the switching centre 7 and delivers converted audio data via the switching centre 7 and telephone network 6 to one or a plurality of the telephones 5. Alternatively, converter 12 can be integrated as hardware or software in web server 4, fileserver 8 or switching centre 7. The converter 12 is connected to the switching centre 7 like a regular telephone or a plurality of telephones. Alternatively the converter 12 and switching centre 7 are connected by a special software or hardware interface.

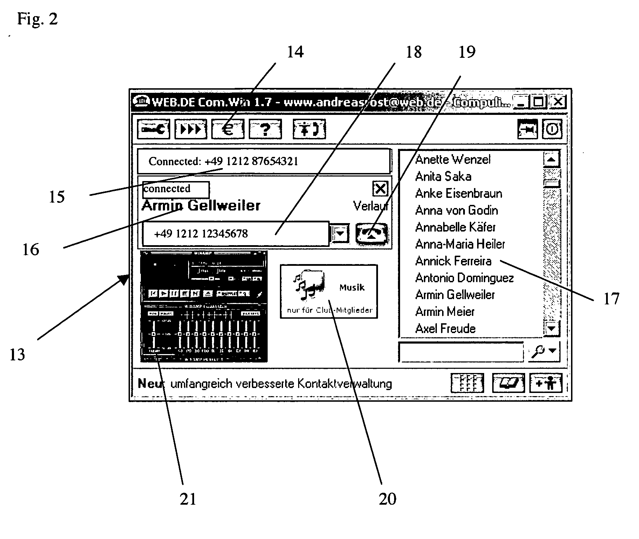

Fig. 2 shows an example of a web page 13 of a telecommunications website with means to control delivery of stored audio data files. The web page 13 comprises a button bar 14, a first telephone frame 15 showing the current telephone number assigned to the current user unit, a second telephone frame 16 showing information about an address that was chosen out of a list in an address book-frame 17. By choosing an address in the address book frame 17, then choosing one of possibly a multitude of telephone numbers in a list box 18 and finally clicking on button 19 a telephone call is initiated to the telephone identified by the telephone number shown in list box 18. As shown in Fig. 2, the first user is connected using his own telephone number +49-121287654321 with the called party having the telephone number +49-121212345678.

An audio file directory 20 offers the possibility to choose an audio file. Directory 20 can be based locally on client computer 1 but is preferably located at the audio file server 8. By clicking on directory 20, the first user is offered a standard directory window as used for example by Microsoft Windows, Apple Macintosh or other systems. Therefore the graphical details of the directory tree or directory window are not displayed in detail here.

As the first user has chosen an audio data file of directory 20, he can playback the audio data file under control of control panel 21.

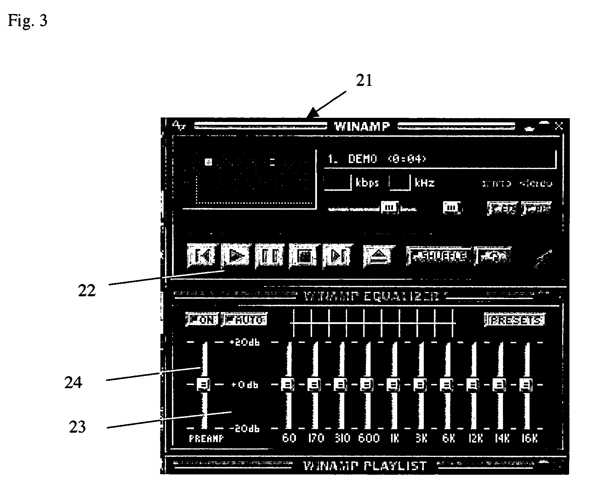

Fig. 3 displays the control panel 21 in more details. The button bar 22 gives general control of a playback function of the system. As known e.g. from customary CD-players, tape recorders etc, buttons for the functions "play", "stop", "pause" and buttons for "fast forward" and "fast backward" are given. Button "play" starts playing the selected audio file, button "Stop" terminates playing the audio file. Button "pause" interrupts playing the file and sets the system in a stand-by-mode (also called "on hold") where a second use of the button starts playing again at the position the "pause" button was pushed. An equalizer window 23 allows controlling the pitch of the played audio data. The pitch can be controlled individually for different frequencies. This kind of manipulating audio data is usually referred to as the functionality of an equalizer. A slider 24 gives control over the volume the audio data is played.

If the first user wants to play an audio file during a telephone call with one or more calling parties, the first user initiates playing of the audio file by clicking on directory 20 and choosing an audio file. By clicking on button "play" of control panel 21 the file is played and the other calling party or parties respectively can listen to the sound, music etc. played via telephone. Nevertheless, common telephone features are still available while playing the audio file, e.g. the calling parties can further talk to each other and features like alternation between lines etc. are further available.

### Reference numerals

- 1: client computer
- 2: Web browser
- 3: data network
- 4: web server
- 5: telephone equipment
- 5a: first telephone equipment
- 5b: second telephone equipment
- 6: telephone network
- 7: switching centre
- 8: file server
- 10: user unit
- 11: dedicated connection
- 12: audio-data-converter
- 13: web page
- 14: button bar
- 15: first telephone frame
- 16: second telephone frame
- 17: address book frame
- 18: list box
- 19: Button
- 20: file directory
- 21: control panel
- 22: button bar
- 23: equalizer window
- 24: Slider

## Claims

1. A communications system comprising a web server (4), a client computer (1), a data network (3) and a telephone network (6) comprising first telephone equipment (5a), a switching centre (7) and at least one second telephone equipment (5b), said client computer (1) and first telephone equipment (5a) forming a user unit (10) assigned to a first user, said client computer (1) being able to communicate with said web server (4) in order to graphically display web pages (13) delivered by the web server (4), said web server (4) being connected with said switching centre (7), **characterized in that** said communications system further comprises means to transmit stored audio data to said at least one second telephone equipment ( 5b).

2. A communications system according to claim 1, **characterized in that** said means to transmit stored audio data comprises a file server (8).

3. A communications system according to claims 1 or 2, **characterized in that** said means to transmit stored audio data comprises means (20) to select audio files.

4. A communications system according to any of the preceding claims, **characterized in that** said means to transmit stored audio data comprises means (21, 23) to manipulate sound characteristics of said audio data.

5. A communications system according to claims 3 or 4, **characterized in that** said means (20) to select audio files is incorporated in a web page (13), in particular in a web page of a telecommunications website.

6. A communications system according to claims 3 to 5, **characterized in that** said means (21, 23) to manipulate sound characteristics of said audio data is incorporated in a web page (13), in particular in a web page of a telecommunications website.

7. A communications system according to claims 5 or 6, **characterized in that** said means (20) to select audio files and/or said means (21, 23) to manipulate sound characteristics of said audio data comprises graphical elements (22, 24).

8. A communications system according to any of the preceding claims, **characterized in that** said means to select audio files (20) and/or said means to manipulate sound characteristics (21, 23) of said audio data comprise means to select and/or manipulate two or more sound data files simultaneously.

9. A communications system according to any of the preceding claims, **characterized in that** said telephone network (6) is able to establish connections between at least three telephones (5, 5a, 5b) and that said means to transmit stored audio data is able to transmit stored audio data to all connected telephones simultaneously.

10. A method to transmit stored audio data to a telephone by using a communications system according to any of the preceding claims.
